# FASCICULE DE BREVET EUROPEEN

(11) **EP 1 239 053 B1**
(45) Date de publication et mention de la délivrance du brevet: **25.10.2006**
(21) Numéro de dépôt: 02290529.3
(22) Date de dépôt: 05.03.2002
(51) Int. Cl.: C21D 9/56, F27D 3/02

(54) **Rouleau destiné au transport d'une bande métallique dans une installation de recuit continu**
Förderrolle zum Transportieren von Metalband in einer Durchlaufglühanlage
Conveyor roll for transporting metal strip in a continuous annealing line

(30) Priorité: 06.03.2001 FR 0102988
(43) Date de publication de la demande: 11.09.2002
(73) Titulaire: ARCELOR France, 93212 La Plaine Saint Denis Cedex (FR)
(72) Inventeur: Dietsch, Hervé, 44100 Nantes (FR)
(74) Mandataire: Plaisant, Sophie Marie

(56) Documents cités:
- EP-A- 0 595 451
- GB-A- 945 244
- US-A- 4 256 519
- US-A- 5 070 587
- PATENT ABSTRACTS OF JAPAN vol. 007, no. 135 (C-170), 11 juin 1983 (1983-06-11) & JP 58 048619 A (TOSHIBA CERAMICS KK), 22 mars 1983 (1983-03-22)
- PATENT ABSTRACTS OF JAPAN vol. 013, no. 179 (C-590), 26 avril 1989 (1989-04-26) & JP 01 008224 A (IBIDEN CO LTD), 12 janvier 1989 (1989-01-12)
- PATENT ABSTRACTS OF JAPAN vol. 1998, no. 12, 31 octobre 1998 (1998-10-31) & JP 10 183260 A (NKK CORP), 14 juillet 1998 (1998-07-14)
- PATENT ABSTRACTS OF JAPAN vol. 1997, no. 02, 28 février 1997 (1997-02-28) & JP 08 260060 A (NIPPON STEEL CORP), 8 octobre 1996 (1996-10-08)

## Description

L'invention concerne un rouleau destiné au transport d'une bande métallique dans une installation de recuit continu composé d'un arbre d'entraînement portant une virole support de bande.

Les rouleaux permettant le transport de bande, dans des recuits continus de bandes métalliques de matériau ferreux ou non ferreux, sont en général en acier allié.

Ces types de rouleaux ont du point de vue thermomécanique un coefficient de dilatation de 17.IO⁻⁶/°C et un coefficient de conductivité thermique d'environ 20 w/m.°C.

Pour compenser les déformations thermomécaniques dans les recuits, un compromis est recherché entre le profil mécanique de la génératrice des viroles des rouleaux donnés par usinage afin d'éviter la formation de plis dans les bandes de format large et mince et les déports de bande dans le cas du traitement de bandes de format de largeur réduite. Les rouleaux sont généralement cylindriques ou réalisés avec une génératrice légèrement courbe, mais ils se déforment dans l'installation de recuit du fait de l'apport calorique de la bande soumise à recuit.

Il est connu de nombreux brevets sur des rouleaux comportant une frette, par exemple à base de cuivre. La déformée de la génératrice de ce type de rouleau, dans un dispositif de recuit, est améliorée d'un facteur d'environ 2 grâce à la haute conductivité du cuivre. Néanmoins, ces rouleaux sont lourds et présentent une grande inertie thermique.

Il est également connu du brevet GB 945 244 un rouleau pour un dispositif de recuit en continu de bande métallique comportant une enveloppe composée soit de graphite, soit d'une mixture de carbone et de poudre de métal aggloméré lié par exemple par un matériau à base de bitume. Ce type d'aggloméré ne semble pas avoir été développé de manière industrielle.

JP-A-58-048619 divulgue un rouleau ayant une virole composite comportant SiC et du graphite. JP-A-10-183260 divulgue un rouleau comportant un arbre en CFC.

Le but de l'invention est de minimiser les déformations du profil des rouleaux en fonction des températures et du format de bande afin d'ouvrir le domaine d'utilisation et permettre le passage, de bandes larges et minces sans générer de plis et de bande étroite, sans la nécessité d'un guidage de bande, grâce à un rouleau indéformable, de poids et inertie moindre réalisé à un coût inférieur, comparativement aux rouleaux par exemple en acier réfractaire avec une frette en cuivre.

L'objet de l'invention est de proposer un rouleau destiné au transport d'une bande métallique, dans une installation de recuit continu, composé d'un arbre d'entraînement portant une virole support de bande, comme il est défini dans la revendication 1.

Les autres caractéristiques de l'invention sont :
- l'arbre est réalisé en matériau composite CFC ou métallique.
- le matériau composite comporte des fibres tissées en au moins deux dimensions.
- la virole comporte un revêtement dur métallique ou céramique.
- le revêtement est choisi parmi le carbure de chrome, ou d'une zircone.
- le revêtement peut comporter une sous couche.
- la sous couche est choisie parmi le type carbone IC, carbure de silicium.

La description qui suit et les figures annexées, le tout donné à titre d'exemple non limitatif, fera bien comprendre l'invention.

La figure 1 présente un exemple de rouleau selon l'invention.

La figure 2 présente des profils de déformation A1 et A2 à une température d'ambiance de 900°C et de 2 largeurs de bande à 300°C du rouleau A selon l'invention, ainsi que les profils B1, B2, C1, C2, dans les mêmes conditions de températures et de largeur de bande, de deux rouleaux B et C, l'un étant une virole en en acier réfractaire, d'autre ayant une virole comportant un revêtement bicouche fer - cuivre.

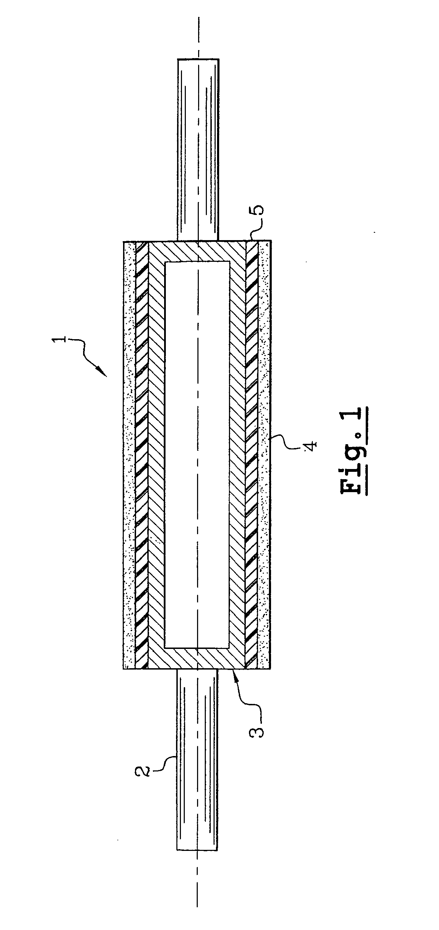

Comme représenté sur la figure 1, le rouleau 1 selon l'invention est destiné au transport d'une bande métallique dans une installation de recuit continu. Ledit rouleau 1 est, dans un exemple de l'invention, composé d'un arbre 2 ou fusée, destiné au support et à l'entraînement du rouleau, ledit arbre portant une virole 3 sur laquelle s'appuie la bande destinée à être recuite.

Selon l'invention, au moins une partie du rouleau 1 est réalisée en matériau composite, la partie la plus impliquée étant la virole 3. Pour des raisons d'homogénéité, l'arbre 2 du rouleau 1 peut être réalisé également en matériau composite.

Le matériau composite utilisé est un composite carbone - fibre de carbone (CFC), carbure de silicium - carbure de silicium (SiC - SiC).

Dans sa structure, le matériau composite comporte des fibres, par exemple, tissés en deux ou trois dimensions.

De préférence, la virole 3 comporte un revêtement 4 dur métallique ou céramique. Le revêtement 4 dur est alors en contact avec la bande traitée. Le revêtement 4 est réalisé de préférence par projection de carbure de chrome, d'une zircone ou de tout autre revêtement pratiqué sur les rouleaux de four.

Le rouleau 1 selon l'invention peut comporter une virole 3 présentant en sous couche du revêtement 4 une couche 5 dite tampon composée d'un matériau choisi par exemple, parmi le type carbone IC, SIC.

L'invention concerne l'utilisation d'un composite carbone - fibres de carbone (CFC), pour la fabrication de la virole d'un rouleau d'une installation de recuit d'une bande métallique et notamment d'une bande d'acier.

Les matériaux composites choisis sont aujourd'hui employés notamment dans le domaine spatial. Ils sont utilisés pour leur grande résistance mécanique à haute température (1200°C) résistance supérieure à celle des aciers réfractaires. Leur coefficient de dilatation est entre quatre et huit fois inférieure à celui des aciers et leur densité quatre fois plus faible.

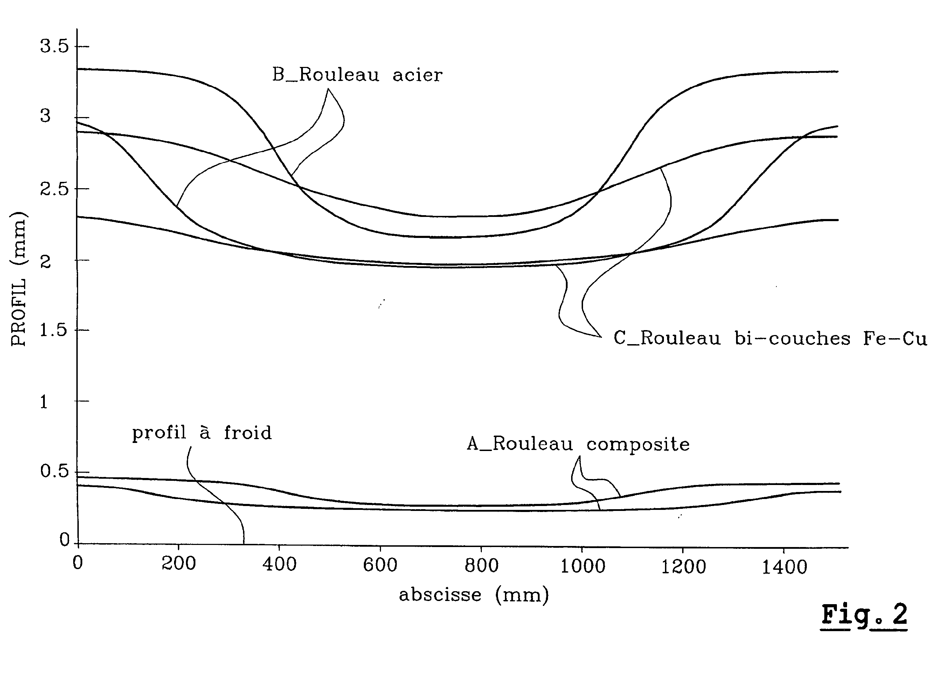

Selon l'invention, et dans l'exemple présenté en caractéristique sur la figure 2, le matériau composite est du type carbone - fibres de carbone (CFC).

Les conditions sont les suivantes :
- température de bande : 300°C.
- température ambiante : 900°C.
- épaisseur de bande : 0,2 mm.
- largeurs de bande : 700 mm et 1200 mm.

On a pu constater que sous la forme cylindrique demandée, la caractéristique A de la déformation en fonction de la température du rouleau 1 de l'invention, sur une longueur de 1500 mm, présente, pour cet exemple de deux largeurs de bande, 700 mm et 1200 mm, une variation très faible, conservant au rouleau une géométrie cylindrique presque parfaite. Les autres rouleaux de comparaison B, et C, développent une forme concave différente en fonction des largeurs de bande, entraînant de ce fait, une déformation de la tôle qu'ils supportent lors de l'opération de recuit. Ceci conduit à usiner les rouleaux pour les rendre compatibles avec la marche de la ligne.

Néanmoins, il faudra faire un compromis pour que le profil d'usinage visé pour contrer la forme concave, par exemple un bombé cylindro conique, satisfait les cas pour des bandes de 700 mm à 1200 mm de large.

Le rouleau ainsi obtenu, trois fois plus léger d'un rouleau en acier, comporte une inertie mécanique trois fois moindre et un bombé thermique sept fois plus faible que le rouleau B en acier et deux fois plus faible qu'un rouleau C revêtu d'une structure mixte acier cuivre.

La solution proposée réside dans la substitution des aciers réfractaires usuels par des matériaux composites réfractaires à très faible coefficient de dilatation et malgré les caractéristiques connus des matériaux composites proposés par les inventeurs, il n'était pas évident de parvenir à la réalisation d'un rouleau cylindrique quasiment indéformable en température, les matériaux composites utilisés n'étant pas destinés à un tel but ou une telle fonction.

Il est possible en combinant les constituants du composite choisi, fibres et (ou) matrice et la manière dont ils sont mis en oeuvre, d'optimiser les facteurs, résistance mécanique, coefficient de dilatation, de manière à les adapter à la fonction demandée dans une installation de recuit, par exemple d'une bande d'acier.

## Revendications

1. Rouleau destiné au transport d'une bande métallique dans une installation de recuit continu, composé d'un arbre d'entraînement (2) portant une virole (3) support de bande, **caractérisé en ce qu**'au moins la virole est réalisée en matériau composite, et en ce que ledit matériau est un composite carbone - fibre de carbone (CFC).

2. Rouleau selon la revendication 1 **caractérisé en ce que** l'arbre est réalisé en matériau composite carbone - fibre de carbone (CFC) ou métallique.

3. Rouleau selon l'une des revendications 1 ou 2 **caractérisé en ce que** ledit matériau composite comporte des fibres tissées au moins en deux dimensions.

4. Rouleau selon la revendication 1 **caractérisé en ce que** la virole comporte un revêtement (4) dur métallique ou céramique.

5. Rouleau selon la revendication 4 **caractérisé en ce que** ledit revêtement est choisi parmi le carbure de chrome, ou d'une zircone.

6. Rouleau selon l'une des revendications 4 ou 5 **caractérisé en ce que** ledit revêtement peut comporter une sous coucher (5).

7. Rouleau selon la revendication 6 **caractérisé en ce que** la sous couche est choisie parmi le type carbone IC, SIC.

## Claims

1. Roll intended for conveying a metal strip in a continuous annealing installation, composed of a drive shaft (2) bearing a shell (3) that supports the strip, **characterized in that** at least the shell is made of a composite and **in that** said composite is a carbon/carbon fibre composite (CFC).

2. Roll according to Claim 1, **characterized in that** the shaft is made of a carbon/carbon fibre composite (CFC) or a metallic material.

3. Roll according to either of Claims 1 and 2, **characterized in that** said composite comprises fibres woven in at least two dimensions.

4. Roll according to Claim 1, **characterized in that** the shell includes a hard metal or ceramic coating (4).

5. Roll according to Claim 4, **characterized in that** said coating is chosen from chromium carbide and a zirconium.

6. Roll according to either of Claims 4 and 5,
**characterized in that** said coating may include an underlayer (5).

7. Roll according to Claim 6, **characterized in that** the underlayer is chosen from the SiC, IC carbon type.

## Patentansprüche

1. Walze, bestimmt für den Transport eines Metallbandes in einer kontinuierlichen Glühanlage, bestehend aus einer Antriebswelle (2), die einen Ring (3) zur Bandabstützung trägt, **dadurch gekennzeichnet, dass** mindestens der Ring aus einem Verbundmaterial hergestellt ist und dass das Material ein Kohlenstoff-Kohlenstofffaser-Verbundstoff (CFC) ist.

2. Walze nach Anspruch 1, **dadurch gekennzeichnet, dass** die Welle aus einem Kohlenstoff-Kohlenstofffaser-Verbundstoff (CFC) oder ein metallisches Material ist.

3. Walze nach einem der Ansprüche 1 oder 2, **dadurch gekennzeichnet, dass** das Verbundmaterial gewebte Fasern in mindestens zwei Dimensionen umfasst.

4. Walze nach Anspruch 1, **dadurch gekennzeichnet, dass** der Ring eine harte metallische oder keramische Beschichtung (4) umfasst.

5. Walze nach Anspruch 4, **dadurch gekennzeichnet, dass** die Beschichtung unter Chromkarbid oder einem Zirkon ausgewählt ist.

6. Walze nach einem der Ansprüche 4 oder 5, **dadurch gekennzeichnet, dass** die Beschichtung eine Unterschicht (5) umfassen kann.

7. Walze nach Anspruch 6, **dadurch gekennzeichnet, dass** die Unterschicht unter dem Typ Kohlenstoff IC, SIC ausgewählt ist.
